# EUROPÄISCHE PATENTSCHRIFT

(11) **EP 3 330 032 B1**
(45) Veröffentlichungstag und Bekanntmachung des Hinweises auf die Patenterteilung: **30.12.2020**
(21) Anmeldenummer: 17206577.3
(22) Anmeldetag: 08.11.2012
(51) Int. Cl.: B23K 11/31, B23K 11/36, B23K 3/047, B23K 3/08

(54) **ELEKTRISCHE BEARBEITUNGSEINRICHTUNG MIT EINEM GEMEINSAMEN TRÄGER FÜR EINE ZUSTELLEINRICHTUNG UND EINEM WERKZEUGHALTER**
ELECTRICAL PROCESSING DEVICE WITH A COMMON SUPPORTING PART FOR A POSITIONING PART AND A TOOL HOLDER
DISPOSITIF ÉLECTRIQUE D'USINAGE AVEC UN SUPPORT COMMUN POUR UN DISPOSITIF DE POSITIONNEMENT ET UN PORTEUR D'OUTIL

(30) Priorität: 09.11.2011 DE 202011051908 U; 09.11.2011 DE 202011051909 U; 09.11.2011 DE 202011051910 U
(43) Veröffentlichungstag der Anmeldung: 06.06.2018
(62) Dokumentnummer(n) der früheren Anmeldung(en) nach Art. 76 EPÜ: 16188972.0 / 3 138 653; 12794659.8 / 2 776 203
(73) Patentinhaber: AMADA WELD TECH GMBH, 82178 Puchheim (DE)
(72) Erfinder: KEMMERER-FLECKENSTEIN, Dieter, 85368 Moosburg (DE)
(74) Vertreter: Ernicke, Klaus Stefan

(56) Entgegenhaltungen:
- DE-A1- 10 162 656
- FR-A1- 2 309 303
- US-A- 5 628 923
- US-A- 6 091 044
- US-A1- 2003 189 029

## Beschreibung

Die Erfindung betrifft eine elektrische Bearbeitungseinrichtung, insbesondere Schweiß- oder Löteinrichtung mit den Merkmalen im Oberbegriff des Hauptanspruchs.

Die US 2003/189029 A1 (Basis für den Oberbegriff des Anspruchs 1) zeigt eine Roboterschweißzange mit einem Gewichtsausgleich und einer Ausgleichsfeder, die von einem einzelnen Zylinder gespannt werden kann.

Die US 6,091,044 A lehrt eine ähnliche Roboterschweißzange mit einem Gewichtsausgleich mit einem einzelnen federnden Zylinder.

Aus der US 5,628,923 A ist eine andere Roboterschweißzange bekannt, die eine einteilige motorische Stelleinrichtung zur Veränderung der Schweißzangenposition an der Roboterhand für die Kompensation von Schweißkappenverschleiß aufweist.

Aus der Praxis ist es bekannt, elektrische Bearbeitungseinrichtungen der genannten Art, insbesondere elektrische Widerstands-Pressschweißeinrichtungen, als Einzelkonstruktionen auszubilden, die an den jeweiligen Einsatzzweck angepasst sind. Die Bearbeitungseinrichtung weist eine Zustelleinrichtung mit einem Antrieb auf, an dessen Abtriebselement ein Elektrodenhalter mit einer Elektrode angeordnet ist. Ein solcher Antrieb ist z.B. als hydraulischer oder pneumatischer Zylinder ausgebildet. Eine solche Bearbeitungseinrichtung ist für den jeweiligen Einsatzzweck speziell ausgebildet.

Bei elektrischen Widerstands-Pressschweißeinrichtungen ist es ferner bekannt, die Elektrodenhalter elektrisch zu isolieren oder eine isolierende Kunststofffolie zwischen Schweißwerkzeug und Führungssystem anzubringen. Diese Isoliermaßnahmen sind in der einen Variante technisch aufwändig und in der anderen nicht hinreichend betriebssicher.

Es ist Aufgabe der vorliegenden Erfindung, eine in technischer und wirtschaftlicher Hinsicht verbesserte elektrische Bearbeitungseinrichtung aufzuzeigen.

Die Erfindung löst diese Aufgabe mit den Merkmalen im Anspruch 1. Weitere Ausführungsformen der Erfindung sind in den Ansprüchen 2 bis 15 definiert.

Die beanspruchte elektrische Bearbeitungseinrichtung lässt sich auch in automatisierten Fertigungsanlagen einsetzen. Hierfür ist die Verstelleinrichtung günstig, die für eine definierte Vorpositionierung oder Zustellung eines beweglichen und z.B. als Schlitten ausgebildeten Trägers gegenüber einer Werkstückzuführung sorgen kann. Dies ist für optimierte und konstante Prozessbedingungen sowie für eine hohe Fügequalität günstig. Die Zustelleinrichtung und die Werkzeuge, insbesondere Elektroden, können sich beim Zustellen und Andrücken am Werkstück einschwimmen und dadurch dessen Toleranzen hinsichtlich Lage und Form etc. kompensieren.

Eine Vorpositionierung und temporäre Lageverriegelung durch die Verstelleinrichtung ist auch für den Einsatz der Bearbeitungseinrichtung, z.B. einer elektrischen oder nichtelektrischen Fügeeinrichtung, in automatisierten Fertigungsanlagen günstig. Die Werkstücke können quer zur Prozessachse und durch den Freiraum zwischen den z.B. zangenartig schließenden Werkzeugen, insbesondere Elektroden, transportiert werden. Zudem können dank der definierten Positioniermöglichkeit diese Zangenöffnung und der Zustellweg der Werkzeuge, insbesondere Elektroden, beim Schließen und Andrücken an das Werkstück verkleinert werden. Dies erlaubt eine optimierte Auslegung der Zustelleinrichtung. Die druckfeste und formstabile Isolierscheibe wirkt sich hierbei ebenfalls vorteilhaft aus.

Zur Optimierung ist außerdem die mehrteilige und teleskopierbare Ausbildung der Verstelleinrichtung und ihrer zwei oder mehr Stellteile vorteilhaft. Dies erlaubt eine Grob- und Feinverstellung und ist auch günstig für die vorgenannte Vorpositionierung mit Löse- und Einschwimmmöglichkeit sowie für eine exakte Voreinstellung und Anpassung der Verstelleinrichtung. Mit der Verstelleinrichtung können auch größere Zustellwege der Werkzeuge, insbesondere Elektroden, zwischen einer Rückzug- oder Ruhestellung und einer Arbeitsposition realisiert werden.

Besonders günstig ist eine modulare Ausbildung der elektrischen Bearbeitungseinrichtung, die ein Baukastensystem und dadurch einen sehr weiten Einsatzbereich ermöglicht.

Insbesondere die Zustelleinrichtung mit ihren Komponenten kann modular aufgebaut sein, wobei verschiedene Antriebsmodule für unterschiedliche Prozessbedingungen und Kraftbereiche zur Verfügung stehen. Der Kunde kann die Bearbeitungseinrichtung dank ihrer Modularität bedarfsweise umbauen und ergänzen und somit an veränderte Einsatzbedingungen, z.B. unterschiedliche Werkstücke, bedarfsweise selbst anpassen. Die modulare Ausbildung ermöglicht ein Baukastensystem und bietet dadurch einen sehr weiten Einsatzbereich sowie einfache, schnelle und kostengünstige Nachrüst- und Umrüstmöglichkeiten.

Die Zustelleinrichtung weist eine Führungseinrichtung auf, die zwischen den Antrieb bzw. das Antriebsmodul und einen Werkzeughalter, insbesondere Elektrodenhalter, geschaltet ist. Die Führungseinrichtung kann bei den verschiedenen modularen Ausgestaltungen der Bearbeitungseinrichtung und insbesondere bei einem Austausch der Antriebsmodule beibehalten werden. Sie kann hierzu für die unterschiedlichen Kraftbereiche und ggf. auch Wegbereiche einheitlich ausgebildet sein. Eine definierte Schnittstelle ermöglicht den Austausch und Wechsel von Antriebsmodulen, die an der Führungseinrichtung angebaut und montiert werden können, wobei diese ihrerseits an einem stationären oder beweglichen Träger montierbar ist.

Die Schnittstelle kann einheitliche Anschlüsse für die Gestelle oder Grundkörper von Führungseinrichtungen und Antriebsmodulen aufweisen. Ferner kann die Führungseinrichtung ein beweglich geführtes und gelagertes Treibelement, insbesondere eine Treibstange, für die Kraft- und Wegübertragung aufweisen, welches einen einheitlichen Anschluss zur direkten oder mittelbaren Verbindung mit einem Abtriebselement des Antriebsmoduls aufweist. Bei einer mittelbaren Verbindung kann eine Kupplung zwischengeschaltet sein.

Zur effektiven und präzisen Kraft- und Wegübertragung ist eine Ausbildung des Treibelements als axial bewegliche Treibstange von Vorteil, die zur Abdeckung des gesamten Kraft- und Wegbereichs entsprechend ausgebildet sein kann. Eine Verdrehsicherung ermöglicht eine definierte reine Axialbewegung und erlaubt eine exakte und verdrehungsfreie Zustellung des Werkstücks, insbesondere einer Elektrode. Insbesondere können Querkräfte oder Momente von der Zustelleinrichtung aufgenommen und abgestützt werden, die an der Prozessstelle auf das Werkzeug, insbesondere die Elektrode, eingeleitet werden. Die Abstützung kann an der Führungseinrichtung erfolgen, wobei das Antriebsmodul hiervon entlastet ist und entsprechend einfacher ausgestaltet sein kann.

Bei der elektrischen Bearbeitungseinrichtung kann zwischen einem Werkzeughalter und einem Werkzeug, insbesondere einem Elektrodenhalter, ein elektrisches Isolierelement angeordnet sein. Das elektrische Isolierelement ist bevorzugt als druckfeste und formstabile Isolierscheibe aus einem Keramikwerkstoff ausgebildet.

Die Antriebe oder Antriebsmodule können in beliebig geeigneter Weise ausgeführt sein, z.B. als pneumatischer oder hydraulischer Zylinder oder als Servoantrieb. Ein Zylinder kann z.B. eine definierte Kraft aufbringen und über die Isolierscheibe auf die Elektrode übertragen. Mit einem Servoantrieb ist neben der Kraft auch der Weg steuerbar oder ggf. regelbar. Ein Servoantrieb kann z.B. als elektrischer Spindeltrieb, Zahnstangentrieb oder dgl. ausgeführt sein und entsprechende Messsysteme für Weg und Kraft bzw. Moment beinhalten. Für die exakte Steuer- oder Regelbarkeit ist die druckfeste Ausbildung der Isolierscheibe von besonderem Vorteil.

Weitere Module der Bearbeitungseinrichtung können insbesondere ein gemeinsamer Träger für die Zustelleinrichtung nebst Gegen-Werkzeughalter, eine Verstellvorrichtung für einen beweglichen Träger und die ein oder mehreren Werkzeughalter, insbesondere Elektrodenhalter, sein. Die Werkzeuge, insbesondere Elektroden, sind ebenfalls austauschbar. Die Isolierscheibe kann universell und für alle Varianten verwendbar sein.

Die Isolierscheibe hat den Vorteil, dass sie durch ihren Keramikwerkstoff druckfest und formstabil ist. Sie kann durch ihre maximale Steifigkeit und Scherfestigkeit Kräfte übertragen und gleichzeitig elektrisch und thermisch isolieren, wobei die Kraftübertragung ohne prozessrelevante Verformung erfolgt. Insbesondere können Zustell- und Andruckkräfte über die Isolierscheibe ohne unerwünschte Nachgiebigkeiten übertragen werden. Die von einer Zustelleinrichtung eingeleiteten Kräfte können kontrolliert und verlustfrei an das Werkzeug, insbesondere eine Elektrode, übertragen werden. Hierbei lässt sich bei der Bearbeitungseinrichtung mit hoher Prozesssicherheit die auf ein Werkstück einwirkende Kraft einstellen und steuern und ggf. regeln.

Besonders günstig ist eine kraft- und/oder momentenübertragungsfähige Kontur der Isolierscheibe. Hierüber kann einerseits eine exakte Positionierung des Werkzeugs, insbesondere einer Elektrode, gegenüber dem jeweiligen Werkzeug- oder Elektrodenhalter erfolgen. Andererseits können auch ggf. Momente und Bewegungen übertragen werden, falls z.B. das Werkzeug, insbesondere eine Elektrode, um seine Hauptachse gedreht wird, was z.B. relativ zum Werkstück erfolgen kann. Etwaige eingeleitete Drehbewegungen und Momente, aber auch evtl. Querkräfte werden von der Isolierscheibe über die Kontur sicher übertragen und abgestützt.

Eine kräfte- und momentenübertragende Kontur kann in unterschiedlicher Weise ausgebildet und an einer oder mehreren Stellen der Isolierscheibe vorhanden sein. Sie kann insbesondere mit einer entsprechenden Gegenkontur an dem Werkzeug, insbesondere einer Elektrode, und dem Werkzeughalter, z.B. einem Elektrodenhalter, zusammenwirken. Eine komplementäre Ergänzung der beiderseitigen Konturen ist für die sichere und spielfreie Bewegungs-, Kräfte- und Momentenübertragung vorteilhaft.

Einander ergänzende Konturen an Isolierscheibe, Werkzeug und Werkzeughalter sind auch zu Identifizierungs-, Zuordnungs- und Sicherheitszwecken vorteilhaft. Fehlerhafte Kombinationen können ausgeschlossen werden. Die Konturenausbildung kann eine definierte und isolierende Schnittstelle zwischen Werkzeug und Werkzeughalter schaffen.

Das Isolierelement kann Werkzeug und Werkzeughalter in Montagestellung voneinander distanzieren und einen Spalt schaffen. Hier kann vorteilhafterweise eine ringartige Dichtung angeordnet sein, um die elektrische Isolierung weiter abzusichern und gegen Umwelteinflüsse unempfindlich zu machen und Nebenschlüsse zu verhindern. Sie kann außerdem komprimierbar sein und evtl. Fertigungs- und Spalttoleranzen aufnehmen.

Die Bearbeitungseinrichtung kann in unterschiedlicher Weise ausgebildet sein. Besondere Vorteile bestehen bei einer elektrischen Widerstands-Pressschweißeinrichtung oder einer elektrischen Löteinrichtung. Beide arbeiten mit Elektroden, die gegen ein Werkstück angepresst werden können und die durch die keramische Isolierscheibe gegen ihren jeweiligen Elektrodenhalter elektrisch isoliert und mit dem Gegenhalter druckfest verbunden sind. Eine solche Isolierung kann an einer oder mehreren bzw. allen Elektroden vorhanden sein.

Günstig ist auch eine Sensorikanordnung an der Führungseinrichtung, die für alle modularen Konfigurationen oder Baukastenzusammenstellungen einheitlich sein kann.

Ferner kann die Bearbeitungseinrichtung mit ihren Komponenten, insbesondere auch die Verstelleinrichtung, eine einheitliche Bedien- und Service-Seite haben, die einen optimalen Zugang gewährleistet, insbesondere zu Einstellungs- und Wartungszwecken, speziell auch zu der keramischen Isolierscheibe und deren Befestigung. Bei der Führungseinrichtung liegt die Verdrehsicherung an dieser besagten Seite, wobei von hier auch ein Zugang zu dem Treibelement und dessen Lagerung gegeben ist. An der Führungseinrichtung können diese Teile zur besagten Seite hin offen liegen, wobei eine ggf. gemeinsame Abdeckung für die Zustelleinrichtung den Zugang betriebssicher verschließen kann. Auch bei den Antrieben bzw. Antriebsmodulen können die Bedien- und Einstellelemente an der besagten Bedien- und Service-Seite liegen. Bei der Verstelleinrichtung können der oder die Stellantrieb(e) nebst Mitnehmer, Anschlag sowie ggf. Stossdämpfer und deren Verstellmöglichkeiten bequem erreicht werden. Die Bedienung und Wartung wird vereinfacht und kann innerhalb des Baukastensystems stets gleich bleiben, was den Dokumentations- und Schulungsaufwand deutlich mindert.

Eine elektrische Bearbeitungseinrichtung kann folgende weitere Ausgestaltungsmerkmale einzeln oder in Kombination haben.

Zwischen Werkzeughalter und Werkzeug kann ein elektrisches Isolierelement, insbesondere eine Isolierscheibe, angeordnet sein.
Die druckfeste und formstabile Isolierscheibe aus einem Keramikwerkstoff zwischen Werkzeughalter und Werkzeug kann eine kräfteübertragungsfähige Kontur aufweisen.
Die Isolierscheibe kann eine nicht rotationssymmetrische Kontur aufweisen.
Die Isolierscheibe kann am Umfang eine nicht rotationssymmetrische Kontur mit Schlüsselflächen aufweisen.
Die Isolierscheibe kann ebene Ober- und Unterseiten aufweisen.
Die Isolierscheibe kann an der Oberseite und/oder Unterseite eine profilierte Kontur aufweist.
Die Isolierscheibe kann eine bevorzugt zentrale Durchgangsöffnung, insbesondere für ein Fixierelement, aufweisen.
Das Fixierelement kann einen Schaft mit einem Durchmesser aufweisen, der kleiner als der Durchmesser der Durchgangsöffnung ist.
Der Keramikwerkstoff der Isolierscheibe kann als Oxidkeramik, insbesondere Aluminiumoxid, Zirkonoxid, Titanoxid oder zirkonverstärktes Aluminiumoxid, ausgebildet sein.
Die Isolierscheibe kann umfangseitig von einer Dichtung umgeben sein.
Der Werkzeughalter kann eine Aufnahme für das Isolierelement aufweisen.
Die besagte Aufnahme kann an einem Elementhalter angeordnet sein.
Das besagte Werkzeug kann eine Aufnahme für das
Isolierelement aufweisen.
Die Isolierscheibe kann in Montagestellung mit den besagten Aufnahmen in einem formschlüssig und vorzugsweise spielfreien Eingriff stehen.
Die Aufnahme(n) kann/können als wannenartig vertiefte, formschlüssige Fassung für das Isolierelement ausgebildet sein.
Die Aufnahme(n) kann/können eine Gegen-Kontur aufweisen, die formschlüssig mit der Kontur des Isolierelements zusammenwirkt.
Die Aufnahme(n) kann/können eine Gegen-Kontur aufweisen, die zu der Kontur des Isolierelements komplementär ist. Die Aufnahme(n) kann/können eine Tiefe aufweist, die geringer als die Dicke des Isolierelements ist.
Das Isolierelement kann formschlüssig zwischen dem Werkzeughalter und dem Werkzeug montiert sein und kann diese Teile unter Spaltbildung distanzieren.
Zwischen dem Werkzeughalter und dem Werkzeug kann im Spalt die Dichtung angeordnet sein.
Das Fixierelement, insbesondere eine Schraube, kann den Werkzeughalter und das Werkzeug elektrisch isolierend verbinden.
Das Fixierelement kann in Montagestellung das Isolierelement durchsetzen und am Werkzeughalter oder am Werkzeug mit einem Isolierteil, insbesondere einer Isolierhülse, abgestützt sein.
Die Bearbeitungseinrichtung kann als elektrische Widerstands-Pressschweißeinrichtung oder als elektrische Löteinrichtung ausgebildet sein und mehrere relativ bewegliche Elektroden mit Elektrodenhaltern und dazwischen angeordneten Isolierelementen aufweisen.
Die Elektrode kann einen vom Elektrodenhalter isolierten und getrennt angeordneten Stromanschluss aufweisen.
Die Führungseinrichtung der Zustelleinrichtung kann eine definierte Schnittstelle zum wechselbaren Anschluss unterschiedlicher Antriebe aufweisen.
Die Schnittstelle kann einheitliche Anschlüsse für Gestelle oder Grundkörper der Führungseinrichtung und des jeweiligen Antriebs aufweisen.
Die Führungseinrichtung kann ein beweglich geführtes und gelagertes Treibelement, insbesondere eine Treibstange, für die Kraft- und Wegübertragung aufweisen, welches einen einheitlichen Anschluss zur direkten Verbindung oder mittelbaren Verbindung, insbesondere durch eine Kupplung, mit einem Abtriebselement des Antriebs aufweist.
Ein Antrieb der Zustelleinrichtung kann als pneumatischer oder hydraulischer Zylinder oder als Servoantrieb ausgebildet sein.
Die Bearbeitungseinrichtung kann eine Sensorik zur Erfassung von Prozessgrößen, insbesondere Zustell- und Andrückkraft, Zustellweg, Temperatur, insbesondere Schweiß- oder Löttemperatur, Zeit oder dgl. aufweisen.
Die Bearbeitungseinrichtung kann als Baukastensystem ausgebildet sein und unterschiedliche Antriebe aufweisen. Ein beweglicher Werkzeughalter kann an der Abtriebsseite der Führungseinrichtung und ein Werkzeughalter relativ dazu stationär angeordnet sein.
der Träger kann als Modul der Bearbeitungseinrichtung ausgebildet sein, wobei die Führungseinrichtung am Träger und der Antrieb an der Führungseinrichtung montiert ist.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine modulare elektrische Bearbeitungseinrichtung mit keramischen Isolierscheiben in perspektivischer Ansicht,
- Figur 2:: ein Gestell mit einem Schlitten der Bearbeitungseinrichtung in perspektivischer Ansicht,
- Figur 3:: eine Führungseinrichtung einer Zustelleinrichtung in perspektivischer Darstellung,
- Figur 4 und 5:: zwei Antriebsmodule in unterschiedlicher Ausführung,
- Figur 6:: eine perspektivische Prinzipdarstellung einer keramischen Isolierscheibe in ihrer Zuordnung zu Werkzeughaltern,
- Figur 7:: eine Draufsicht auf die keramische Isolierscheibe,
- Figur 8:: einen Querschnitt durch die Isolierscheibe gemäß Schnittlinie VIII-VIII von Figur 7,
- Figur 9:: eine perspektivische Ansicht einer Dichtung,
- Figur 10 und 11:: perspektivische Ansichten eines Elementhalters für die Isolierscheibe aus verschiedenen Blickwinkeln,
- Figur 12:: einen Schnitt durch die Führungseinrichtung und einen Elementhalter mit keramischer Isolierscheibe,
- Figur 13:: eine perspektivische Darstellung der Zustelleinrichtung mit einem beweglichen Träger und einer Verstelleinrichtung,
- Figur 14:: eine Stirnansicht der Verstelleinrichtung und
- Figur 15:: einen Schnitt durch die Verstelleinrichtung gemäß Schnittlinie XV - XV von Figur 14.

Die Erfindung betrifft eine elektrische Bearbeitungseinrichtung (1).

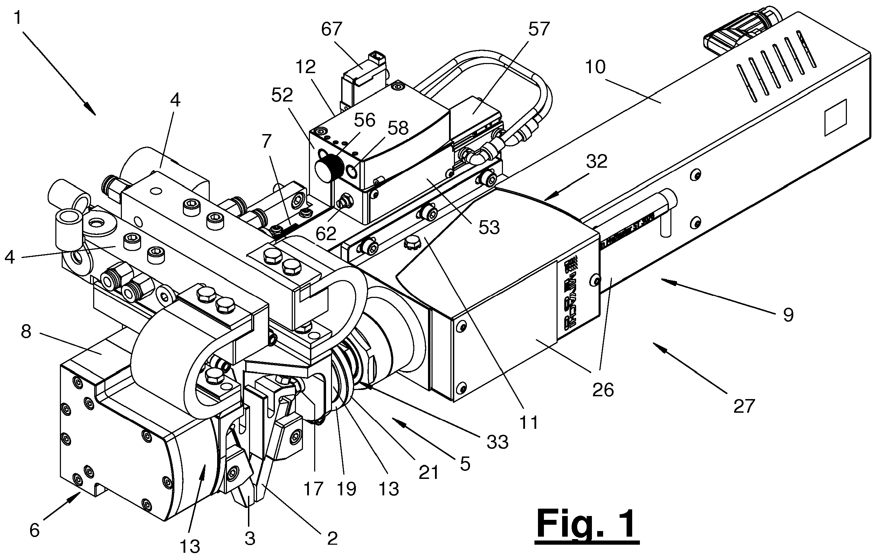

Figur 1 zeigt in perspektivischer Ansicht beispielhaft eine solche elektrische Bearbeitungseinrichtung (1), die hier als modulare elektrische Widerstands-Pressschweißeinrichtung ausgebildet ist. Die Erfindung betrifft grundsätzlich elektrische Bearbeitungseinrichtungen (1), die ein Werkzeug (2,3) aufweisen, welches mit elektrischem Strom und mit einer Anpresskraft beaufschlagt wird sowie mit einem Werkzeughalter (5,6) verbunden ist. Zwischen dem Werkzeughalter (5,6) und dem Werkzeug (2,3) ist ein elektrisches Isolierelement (13) angeordnet. Die Bearbeitungseinrichtung (1) kann ein oder mehrere der besagten Werkzeuge (2,3) aufweisen. Diese können in unterschiedlicher Weise ausgebildet sein.

Im gezeigten Ausführungsbeispiel sind die Werkzeuge (2,3) als Elektroden ausgebildet und z.B. paarweise vorhanden. Die Zahl der Werkzeuge (2,3) und Werkzeughalter (5,6) kann alternativ auch größer als zwei sein. In weiterer Abwandlung kann eine Bearbeitungseinrichtung nur ein bestromtes Werkzeug (2) und einen Werkzeughalter (5) aufweisen. Die in Figur 1 gezeigte elektrische Bearbeitungseinrichtung (1) lässt sich auch zum Löten und zu anderen elektrothermischen Fügeverfahren mit Strom- und Druckbeaufschlagung eines Werkstücks einsetzen.

Die in Figur 1 gezeigte elektrische Bearbeitungseinrichtung (1) weist die besagten zwei Elektroden (2,3) und die zugehörigen Elektrodenhalter (5,6) auf, wobei die Elektroden (2,3) jeweils einen Stromanschluss (4) tragen, der vom Elektrodenhalter (5,6) elektrisch isoliert und getrennt angeordnet ist. Die Elektroden (2,3) können hierüber direkt per Leitung an eine externe Stromquelle angeschlossen werden. Die Elektroden bestehen z.B. aus einem elektrisch leitenden Metall und haben eine an den jeweiligen Prozess und an das Werkstück angepasste Formgebung. Sie können mehrteilig ausgebildet sein und ein mit dem Elektrodenhalter (5,6) verbindbares und z.B. gebogenes Basisteil aufweisen, an dem bedarfsweise wechselbare Backen für den Werkstückkontakt montiert sind.

Die in Figur 1 gezeigte elektrische Bearbeitungseinrichtung (1) weist die besagte Zustelleinrichtung (9) auf, welche die Elektroden (2,3) relativ zueinander verstellt und die Anpresskraft ausübt. Die Zustelleinrichtung (9) besteht aus einem Antrieb (10) und einer Führungseinrichtung (11) zur Antriebsübertragung auf die Elektrode (2). In der gezeigten Ausführungsform hat die Zustelleinrichtung (9) nur einen Antrieb (10), wobei die Führungseinrichtung (11) antriebseitig mit einem Werkzeughalter (5) verbunden ist und diesen samt der angebauten Elektrode (2) an ein Werkstück (nicht dargestellt) zustellt und anpresst. Die Gegenelektrode (3) ist in der gezeigten Ausführungsform mit ihrem Elektrodenhalter (6) relativ stationär gegenüber der zugestellten Elektrode (2) angeordnet. Die Zustelleinrichtung (9) und der hierzu relativ stationäre Werkzeughalter (6) befinden sich an einem gemeinsamen Träger (8). Dieser kann als starrer und stationärer Halter ausgebildet sein. In der gezeigten Ausführungsform ist der gemeinsame Träger (8) als Schlitten ausgebildet, der an einem Gestell (7) beweglich gelagert ist.

In der gezeigten Ausführungsform hat der gemeinsame Träger (8) eine Bewegungsachse, die parallel zur Antriebs- und Zustellachse (48) ausgerichtet ist und kann entlang dieser Bewegungsachse verfahren. Alternativ kann er auch mehr als eine Bewegungsachse aufweisen. Ferner ist in der Ausführungsform von Figur 1 zwischen dem Träger (8) und dem Gestell (7) eine Verstellvorrichtung (12) angeordnet. Diese kann eine oder mehrere Verstellfunktionen haben. Sie kann z.B. den Träger (8) mittels eines Stellteils (53) mit steuerbarem Stellantrieb (57) in einer Anschlagstellung vorpositionieren, z.B. am Führungsende des Gestells (7). Dies kann eine definierte Einfahrstellung für die Zuführung eines Werkstücks sein, wobei die Verstellvorrichtung (12) den Träger (8) dann wieder freigibt, sodass er sich bei Betätigung der Zustellvorrichtung (9) am Werkstück einschwimmen kann. Eine solche Ausgestaltung ist für automatische Fertigungsstraßen von Vorteil.

Die Verstellvorrichtung (12) ist mehrteilig ausgebildet und weist zwei oder mehr Stellteile (52,53) mit Gehäusen (54,55) und Stellantrieben (56,57) aufw. Sie kann insbesondere für einen zusätzlichen Verstellweg des Trägers (8) gegenüber dem Gestell (7) sorgen. Der Stellantrieb (56) kann über ein motorisches Antriebsmittel, einen Zylinder oder dgl. oder durch ein manuelles Stellmittel, z.B. eine Schraube, erfolgen.

Die Bearbeitungseinrichtung (1) ist modular ausgebildet. Insbesondere können der Antrieb (10) und die Führungseinrichtung (11) der Zustelleinrichtung (9) als Module ausgeführt sein, die ggf. gewechselt werden können. Auch der Träger (8) stellt ein Modul dar. Er kann wahlweise stationär oder in schlittenartiger Ausbildung am Gestell (7) beweglich angeordnet sein. An das Träger/Gestell-Modul kann bedarfsweise die Verstellvorrichtung (12) angebaut werden, die ebenfalls ein Modul darstellt. Durch den modularen Aufbau stellt die Bearbeitungseinrichtung (1) ein Baukastensystem dar, welches unterschiedliche Konfigurationen und auch einen Austausch der Module oder Komponenten ermöglicht.

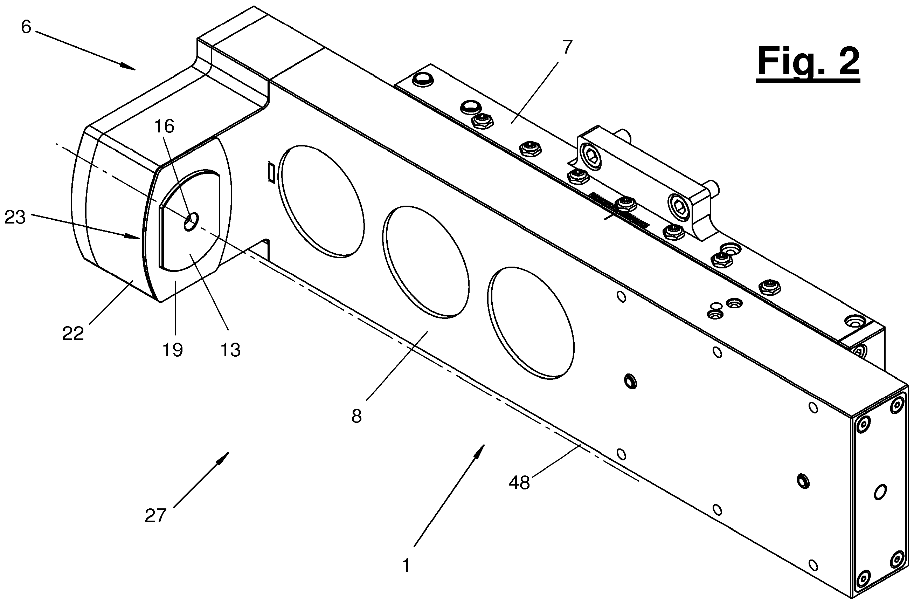

In Figur 2 ist der gemeinsame Träger (8) in Anbaustellung am Gestell (7) dargestellt, wobei auch der Anschluss am Gestell (7) für die Verstellvorrichtung (12) (hier nicht dargestellt) zu sehen ist. Der Träger (8) hat z.B. eine L-Form und bietet an der dem Gestell (7) und seiner Führung gegenüberliegenden Seite vorbereite Anschluss- und Anbaumöglichkeiten für die Zustelleinrichtung (9).

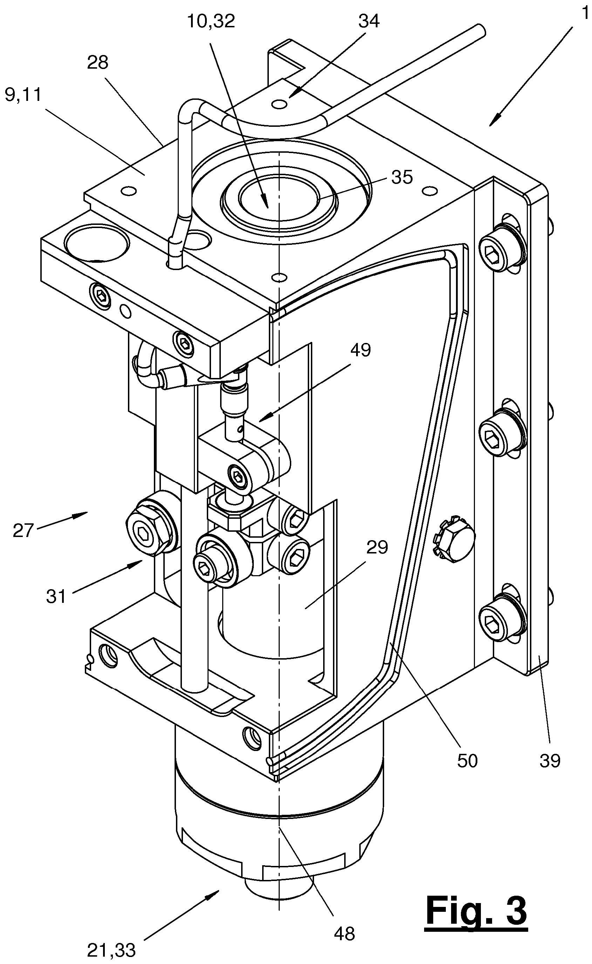

Figur 3 bis 5 zeigen den Antrieb (10) und die Führungseinrichtung (11) der Zustelleinrichtung (9). In Figur 1 sind diese Teile hinter einer ggf. gemeinsamen Abdeckung (26) verborgen. Die Abdeckung (26) ist an der dem gemeinsamen Träger (8) und dem Gestell (7) gegenüberliegenden Seite angeordnet. Dies kann auch eine gemeinsame Bedien- und Serviceseite (27) sein, von der zu Wartungs- und Montagezwecken die Komponenten der Bearbeitungseinrichtung (1) zugänglich sind.

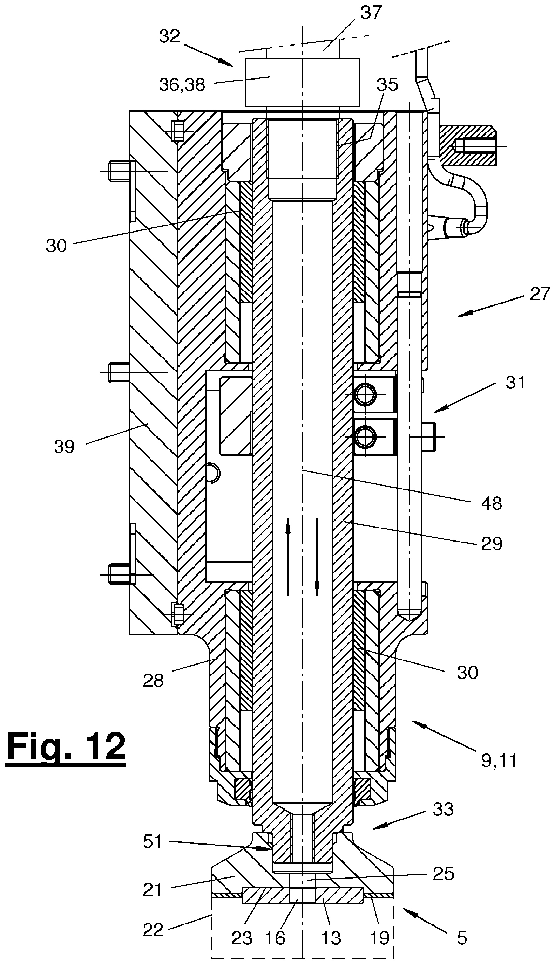

Figur 3 und 12 zeigen die Führungseinrichtung (11), die mit ihrem Gestell oder Grundkörper (28) am Träger (8) direkt oder mit einem Anbauflansch (39), befestigt wird. Die Führungseinrichtung (11) beinhaltet ein längsbewegliches Treibelement (29), z.B. eine Treibstange, mit einer entsprechenden Lagerung (30) und auch einer an der Bedien- und Serviceseite (27) gelegenen Verdrehsicherung (31). Das Treibelement (29) ist am oberen Ende mit dem Antrieb (10) und dessen Abtriebselement verbindbar und kann am unteren Ende mit dem durch einen Pfeil angedeuteten Elementhalter (21) gekoppelt werden. Definierte Schnittstellen (32,33) sind für den wechselbaren Anbau der Antriebe (10) und des Werkzeughalters (5) an der Führungseinrichtung (11) vorgesehen.

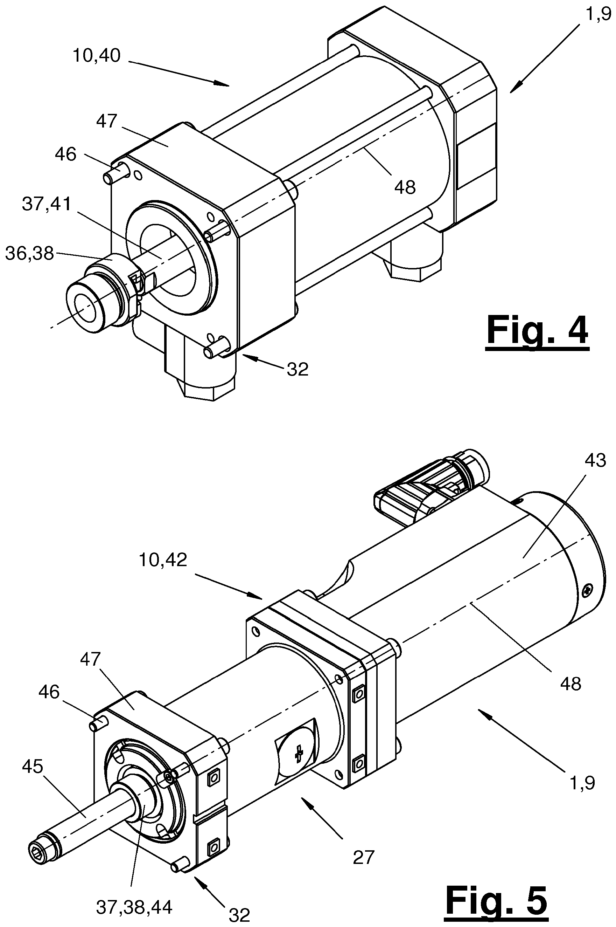

Figur 4 und 5 zeigen zwei Varianten des modularen Antriebs (10). In Figur 4 ist eine Ausführungsvariante als fluidischer, insbesondere pneumatischer oder hydraulischer Antrieb (40) mit einem Zylinder dargestellt. Im Rahmen eines Modul- und Baukastensystems kann z.B. dieser Fluidantrieb (40) unterschiedlich ausgebildet sein und insbesondere unterschiedliche Kräfte entfalten. Das Abtriebselement (37) wird hier von einer Kolbenstange (41) gebildet.

Figur 5 zeigt eine Antriebsvariante mit einem Servoantrieb (42), der z.B. einen steuer- und regelbaren Motor (43), insbesondere einen Elektromotor und ggf. ein Getriebe sowie einen Abtrieb, z.B. einen Spindeltrieb aufweist. Dieser kann z.B. eine in Zustellrichtung bzw. in Richtung der Prozessachse (48) verfahrbare Spindelmutter (44) aufweisen, die das Abtriebselement (37) bildet und die von einer motorseitig drehend angetriebenen Gewindespindel (45) ausgeschoben und eingezogen wird. Das Abtriebselement (37) des modularen Antriebs (10) wird in geeigneter Weise direkt oder mittelbar über eine Kupplung (36) mit dem Treibelement (29) der Führungseinrichtung (11) verbunden.

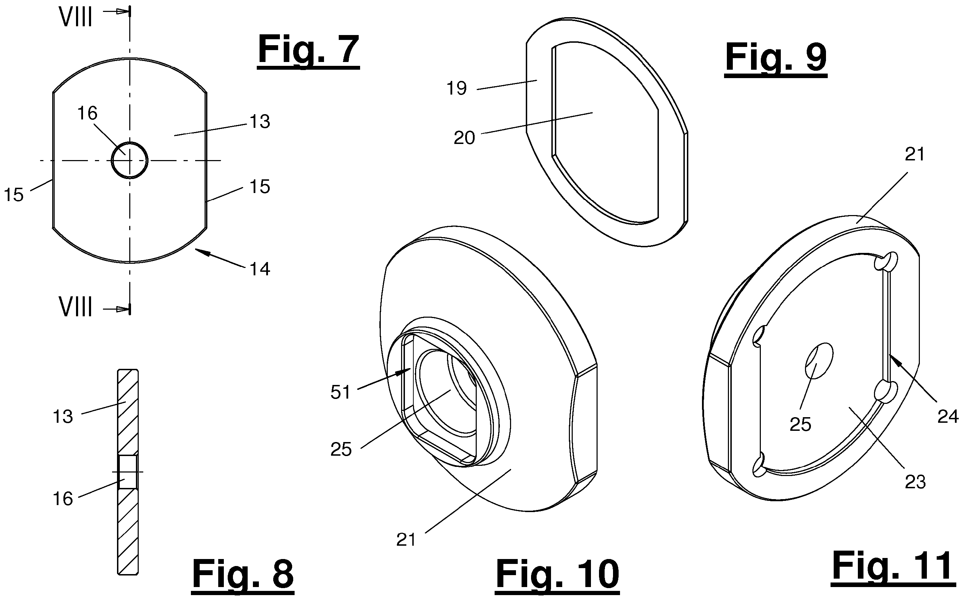

Figur 7 und 8 zeigen das elektrische Isolierelement (13) in Draufsicht und im Schnitt. Das elektrische Isolierelement (13) ist als druckfeste und formstabile Isolierscheibe ausgebildet, die aus einem Keramikwerkstoff besteht. Hierbei kann es sich um eine Oxidkeramik, insbesondere Aluminiumoxid, Zirkonoxid, Titanoxid oder zirkonverstärktes Aluminiumoxid oder dgl. handeln.

Die Isolierscheibe (13) weist eine nicht rotationssymmetrische Kontur (14) auf. Diese kann Kräfte, Momente und ggf. Bewegungen übertragen. Sie kann insbesondere eine Lage und Ausrichtung definieren. Im gezeigten Ausführungsbeispiel ist diese Kontur (14) am Umfang der z.B. flachen Isolierscheibe (13) ausgebildet. Die nicht rotationssymmetrische Kontur (14) kann z.B. durch zwei oder mehr parallele seitliche Schlüsselflächen (15) am Scheibenkörper gebildet werden. An den anderen Umfangsbereichen kann der Scheibenkörper eine rotationssymmetrische Form haben. Figur 7 zeigt diese Ausbildung. Alternativ kann die umfangseitige Kontur (14) prismatisch oder in anderer Weise mit lokalen Vorsprüngen oder dgl. ausgebildet sein. In diesen Ausführungsvarianten kann die Isolierscheibe (13) ebene Ober- und Unterseiten aufweisen. Sie kann ferner eine mittige Durchgangsöffnung (16) für ein Fixierelement (17), z.B. eine Schraube, besitzen.

In einer anderen, nicht dargestellten Ausführungsform kann die nicht rotationssymmetrische und z.B. kräfteübertragungsfähige Kontur (14) auf andere Weise und an anderer Stelle ausgebildet werden, z.B. durch eine Profilierung an der Oberseite und/oder der Unterseite der Isolierscheibe (13). Diese Konturengestaltung kann alternativ oder zusätzlich zu der vorbeschriebenen umfangseitigen Kontur (14) vorhanden sein und ist ebenfalls nicht rotationssymmetrisch zur zentralen Achse bzw. Durchgangsöffnung (16).

Der jeweilige Werkzeughalter (5,6) weist eine Aufnahme (23) für das Isolierelement (13) auf. Desgleichen weist auch das jeweilige Werkzeug (2,3) eine solche Aufnahme (23) auf. Die Aufnahmen (23) sind z.B. als wannenartig vertiefte und formschlüssige Fassung für das scheibenförmige Isolierelement (13) ausgebildet und nehmen dieses in Montagestellung zwischen sich auf. Die Zuordnung kann alternativ umgekehrt sein, wobei die Isolierscheibe (13) ein- oder beidseits Vertiefungen aufweist und am Werkzeug (2,3) und/oder Werkzeughalter (5,6) korrespondierende Vorsprünge vorhanden sind.

Die jeweilige Aufnahme (23) weist für den Scheibeneingriff eine Kontur (24) auf, die als Gegenkontur zu der Kontur (14) der Isolierscheibe (13) ausgebildet ist und mit dieser in einen formschlüssigen und vorzugsweise spielfreien Eingriff tritt. Dieser ermöglicht eine exakte gegenseitige Positionierung von Werkzeughalter (5,6) und Werkzeug (2,3) sowie bedarfsweise auch eine Übertragung von Bewegungen, Kräften und Momenten. Vorzugsweise sind die Konturen (14,24) zueinander komplementär.

Im gezeigten Ausführungsbeispiel haben die Fassungen (23) ebenfalls gerade Schlüsselflächen, zwischen denen die Schlüsselflächen (15) der Isolierscheibe (13) passgenau aufgenommen sind. Auch die anderen Umfangsbereiche der Fassung (23) und der Isolierscheibe (13) sind passgenau zueinander ausgerichtet. Zur Vermeidung von Klemmungen an Übergangsbereichen einer Kontur (14,24) kann jeweils eine Ausnehmung vorhanden sein, sodass hierüber unterbrochene Randbereiche entstehen.

Bei der gezeigten Ausführungsform haben die Aufnahmen oder Fassungen (23) ebene Böden, an denen die Ober- und Unterseite der Isolierscheibe (13) flächig anliegt. Wenn bei einer abgewandelten Ausführungsform eine nicht rotationssymmetrische Kontur durch eine Profilierung an der Ober- oder Unterseite der Isolierscheibe (13) ausgebildet ist, befindet sich am Boden der Aufnahme oder Fassung (23) eine entsprechende Gegenkontur, die formschlüssig und vorzugsweise spielfrei mit der besagten Profilierung in Eingriff tritt und hierbei ebenfalls vorzugsweise komplementär ist.

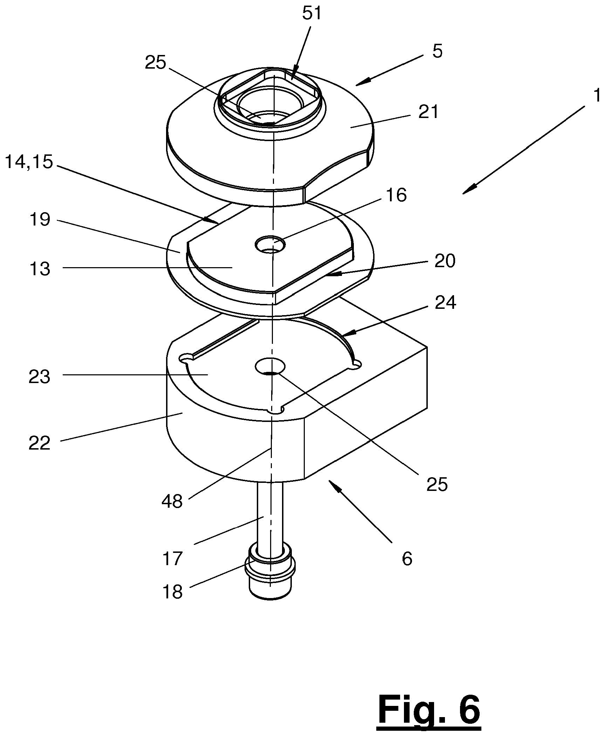

In Figur 1 ist die komplette Elektrodenanordnung mit zwei Elektroden (2,3) und zwei Elektrodenhaltern (5,6) dargestellt, wobei nur eine Isolierscheibe (13) am beweglichen Elektrodenhalter (5) zu sehen ist. Figur 6 verdeutlicht in einer Prinzipdarstellung die gegenseitige Zuordnung von einer Isolierscheibe (13) und einer jeweiligen Aufnahme (23) an einem Elektrodenhalter (5,6). Die Elektroden (2,3) sind hier der Übersicht halber nicht dargestellt, wobei aus dem gleichen Grund auch nur eine von den zwei Isolierscheiben (13) gezeigt ist.

In Figur 6 ist außerdem die Zuordnung eines Fixierelements (17) zu dem relativ ortsfesten Werkzeug- oder Elektrodenhalter (6) zu erkennen, der z.B. an einem quer vorstehenden Ansatz am einen Ende des gemeinsamen Trägers (18) angeordnet ist. Dieser Ansatz bildet einen Elementhalter (22) mit der Aufnahme (23) und mit eine Gewindebohrung oder dgl. für das Fixierelemente (17). Die Aufnahmen (23) der Elementhalter (21,22) und der Werkzeuge bzw. Elektroden (2,3) weisen jeweils eine vorzugsweise mittige Durchlassöffnung (25) auf, die mit der Durchlassöffnung (16) der zugeordneten Isolierscheibe (13) in Montagestellung fluchtet. Die Durchgangsöffnungen (16,25) haben gegenüber dem Fixierelement (17) Übermaß zur Vermeidung von stromleitenden Kontakten. Die berührungsfreie Zentrierung des Schraubschaftes der Schraube (17) kann durch das Isoliermittel (18) bewirkt werden, das am kopfseitigen Ende des Schraubschaftes aufgezogen ist und mit der sich die Schraube (17) jeweils am Werkzeug (2,3), z.B. an dessen Basisteil, über eine dortige ringförmige Ansenkung abstützt und zugleich den Schraubschaft berührungsfrei in den Öffnungen (16,25) zentriert. Die bei der Elektrodenzustellung eingeleiteten Axialkräfte werden über die drucksteife Isolierscheibe (13) übertragen und abgestützt, wobei das Fixierelement (17) nur Haltefunktion haben kann und die gegenseitige Positionierung von Werkzeug (2,3) und Werkzeughalter (5,6) in der vorerwähnten Weise über die Konturen (14,24) erreicht wird.

Die Aufnahmen (23) von Elektrode (2,3) und zugehörigem Elektrodenhalter (5,6) haben eine Tiefe, die geringer ist als die Dicke der Isolierscheibe (13). In Montagestellung distanziert die Isolierscheibe (13) die Elektrode (2,3) und den zugehörigen Elektrodenträger (5,6) unter Bildung eines umlaufenden Spalts. In diesem Spalt kann eine Dichtung (19) angeordnet sein, die in Figur 1, 2, 6 und 9 sowie 12 dargestellt ist. Die Dichtung (19) kann den besagten Spalt ausfüllen und den Zutritt von Umwelteinflüssen, z.B. Staub, Schweißpartikeln etc. verhindern. Dies sichert die Isolierwirkung. Die Dichtung (19) kann z.B. gemäß Figur 9 ringartig ausgebildet sein und auf die Isolierscheibe (13) gemäß Figur 6 umfangseitig aufgezogen sein. Die Dichtung (19) weist eine Öffnung (20) auf, die an die Außenkontur der Isolierscheibe (13), insbesondere an deren ggf. vorhandene nicht rotationssymmetrische Umfangskontur (14) angepasst ist. Die äußere Umfangsform der Dichtung (19) kann an die Formgebung des jeweiligen Elektrodenhalters (5,6) bzw. dessen Elementhalters (21,22) angepasst sein, um außenseitig bündig abzuschließen und eine Spaltbildung zu vermeiden. Die Dichtung (19) besteht aus einem elektrisch isolierenden und ggf. elastischen Material. Das Dichtungsmaterial kann ggf. bei der Montage im Spalt komprimiert und zu Abdichtungszwecken gequetscht werden.

Figur 1, 6, 10, 11 und 12 verdeutlichen auch die Ausbildung des beweglichen Elektrodenhalters (5). Dieser ist am abtriebseitigen Ende der Führungseinrichtung (11) angeordnet und befindet sich z.B. am Ende von deren Treibelement (29). Der Elektrodenhalter (5) kann ebenfalls einen scheibenartigen Elementhalter (21) mit einer Durchgangsöffnung (25) aufweisen, durch die ein Fixierelement (17) zur Befestigung der Elektrode (2) am Elementhalter (21) oder am Treibelement (29) greifen kann. Der Elementhalter (21) weist an der einen Seite die vorbeschriebene Aufnahme oder Fassung (23) auf. Er kann an der anderen Seite eine Schnittstelle (33) zur Verbindung mit dem Treibelement (29) aufweisen. Diese wird z.B. von drehschlüssigen Aufnahmen (51), z.B. in Form von Steckfassungen mit einem nicht rotationssymmetrischen Querschnitt am unteren Treibstangenende und an der Oberseite des Elementhalters (21) gebildet.

Die Durchgangsöffnung (25) hat gemäß Figur 12 im Fassungsbereich einen vergrößerten Querschnitt und nimmt das verjüngte Treibstangenende auf, wobei sich durch die abgestufte Formgebung der Elementhalter (21) und das Treibelement (29) in Axialrichtung aneinander abstützen. Das Treibstangenende weist ferner eine Bohrung mit einem Innengewinde zur Befestigung des Fixierelements (17) auf. Das Fixierelement (17) durchsetzt das Werkzeug (2), insbesondere die Elektrode.

Figur 3 und 12 zeigen weitere Details der Zustelleinrichtung (9) und ihrer Führungseinrichtung (11). Die Führungseinrichtung (11) weist an der Oberseite eine Schnittstelle (32) zur Verbindung mit dem austauschbaren Antrieb (10) und an der Unterseite die erwähnte Schnittstelle (33) zum Werkzeughalter (5) auf. Sie kann ferner an der Rückseite eine Schnittstelle zur Verbindung mit dem Träger (8) aufweisen, die hier in der erwähnten Weise als Anbauflansch (39) ausgebildet ist. Die Schnittstellen (32,33,39) ermöglichen definierte Anschlüsse und Anpassungen an unterschiedliche Träger (8), Antriebe (10) und Werkzeughalter (5).

Wie Figur 3 und 12 verdeutlichen, hat die Führungseinrichtung (11) ein Gestell oder einen Grundkörper (28), in dem das Treibelement (29) mittels einer Lagerung (30) verstellbar gelagert und geführt ist.

Die Schnittstelle (32) weist Anschlüsse (34,46) am Grundkörper (28) der Führungseinrichtung (11) und am Grundkörper oder Gestell (47) des jeweiligen Antriebs (10) auf, die aufeinander abgestimmt sind und formschlüssig zur gegenseitigen exakten Positionierung und ggf. Befestigung des Antriebs (10) an der Führungseinrichtung (11) dienen.

Die Schnittstelle (32) weist ferner einen Anschluss (35) am Treibelement (29) und einen Anschluss (38) am Abtriebselement (37) des Antriebs (10) auf, die für deren direkte oder mittelbare Verbindung sorgen können. Der Anschluss (35) ist z.B. als Bohrung mit Innengewinde am oberen Ende des Treibelements (29) ausgebildet. Der Anschluss (38) kann für eine direkte Verbindung ein Gegengewinde aufweisen oder kann eine zwischengeschaltete Kupplung (36) oder einen Adapter beinhalten.

Bei der Ausführungsform von Figur 4 weist der pneumatische oder hydraulische Antrieb (40) am Ende seiner Kolbenstange (41) ein z.B. als Ringnut ausgebildetes Anschlusselement auf, an dem die Kupplung (36) mit einer Gabel oder Klaue formschlüssig für die Übertragung von Axialkräften angreift und ihrerseits dann mit dem Anschluss (35) am Treibelement (29) verbunden ist.

In der Variante von Figur 5 des Servoantriebs (42) mit der Spindelmutter (44) kann letztere am Mantel den Anschluss (38), z.B. in Form eines Außengewindes, aufweisen und mit dem Anschluss (35) des Treibelements (29) drehfest verbunden, z.B. in dessen Innengewinde (35) fest eingeschraubt werden. Die motorisch angetriebene Gewindespindel (45) schiebt dann die Spindelmutter (44) und das Treibelement (29) steuer- und ggf. regelbar in Achsrichtung (48) vor und zurück. Die Gewindespindel (45) kann dabei ggf. kollisionsfrei in den zentralen Hohlraum der Treibstange (29) ragen. Der Spindeltrieb kann z.B. eine geringe Selbsthemmung und eine Kugelumlaufführung aufweisen.

Gemäß Figur 3 und 12 ist das Treibelement (29) ist in der erwähnten Weise als gerade zylindrische Treibstange ausgeführt, die eine Axialbewegung in Richtung der Prozessachse (48) ausführt und in Gleit- oder Wälzlagern (30) geführt und abgestützt ist. Das Treibelement (29) ist für alle Antriebe (10) und Antriebskräfte einheitlich ausgebildet.

Die Verdrehsicherung (31) besteht in der gezeigten Ausführungsform aus paarweise angeordneten Rollen, die mit einer zur Achse (48) beabstandeten und parallelen sowie am Grundkörper (28) fixierten Führungsstange in stützenden und rollenden Eingriff treten. Die Rollen sind ihrerseits mittels Manschetten oder dgl. an der Treibstange (29) befestigt und werden bei deren axialen Zustellbewegungen mitgenommen, wobei sie an der Führungsstange abrollen und eine Treibstangendrehung verhindern.

An der Verdrehsicherung (31) kann gemäß Figur 3 auch eine Sensorik (49) angeordnet sein, welche z.B. über die besagten Rollen die Treibstangenbewegungen aufnimmt. Die Sensorik kann z.B. als Weggeber, insbesondere als Potentiometer oder dgl., ausgebildet sein. Sie kann mit einer Steuerung (nicht dargestellt) der Bearbeitungseinrichtung (1) über die in Figur 3 und 12 gezeigte Leitung verbunden sein. Die Sensorik (49) kann alternativ entfallen oder an anderer Stelle der Zustelleinrichtung (9) angeordnet sein. Sie kann z.B. einem Antrieb (10), insbesondere einem Servoantrieb (42) zugeordnet sein. Eine Sensorik kann alternativ oder zusätzlich eine oder mehrere andere Prozessgrößen erfassen, z.B. eine Zustell- und Andrückkraft, eine Temperatur, insbesondere Schweiß- oder Löttemperatur, die Zeit oder dgl. Der Fügeprozess, insbesondere der elektrische Widerstandsschweiß- oder Lötprozess, kann z.B. über die wesentlichen Prozessgrößen Zeit, Weg und Kraft und deren Erfassung gesteuert oder geregelt werden. Die druckfeste Isolierscheibe (13) ist wegen ihrer Formfestigkeit auch hierfür von Vorteil.

Die Befestigung der ggf. gemeinsamen Abdeckung (26) kann an der Führungseinrichtung (11) erfolgen. Diese kann hierfür an ihrem Grundkörper (28) eine entsprechende Halterung (50) aufweisen, die z.B. aus beidseitigen Wandvertiefungen zur formschlüssigen Aufnahme der zugeordneten Seitenwände der Abdeckung (26) ausgebildet sind. Eine Fixierung kann über Schrauben oder dgl. erfolgen. Ferner kann die Abdeckung (26) mehrteilig sein mit Einzelfixierung an der Führungseinrichtung (11) und am Antrieb (10).

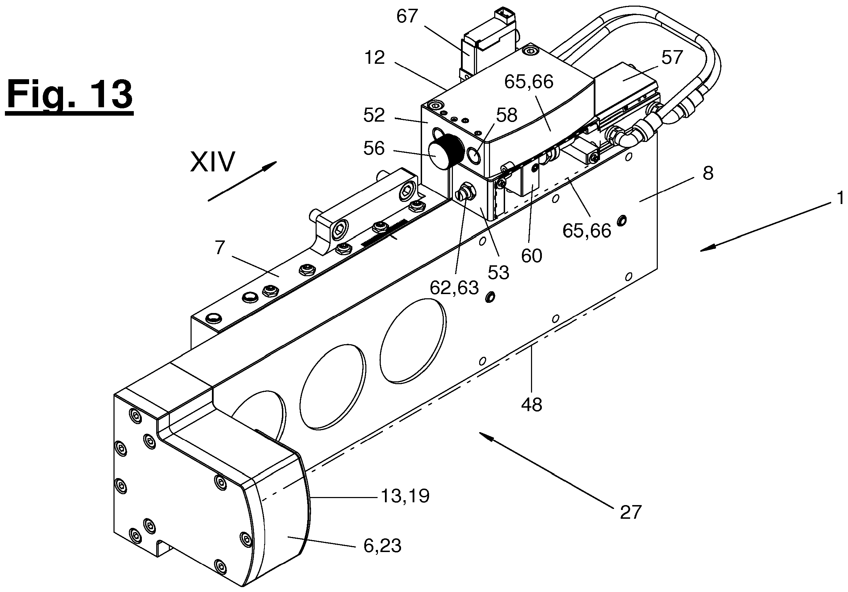

Weitere Details der Verstelleinrichtung (12) sind in Figur 13 bis 15 dargestellt.

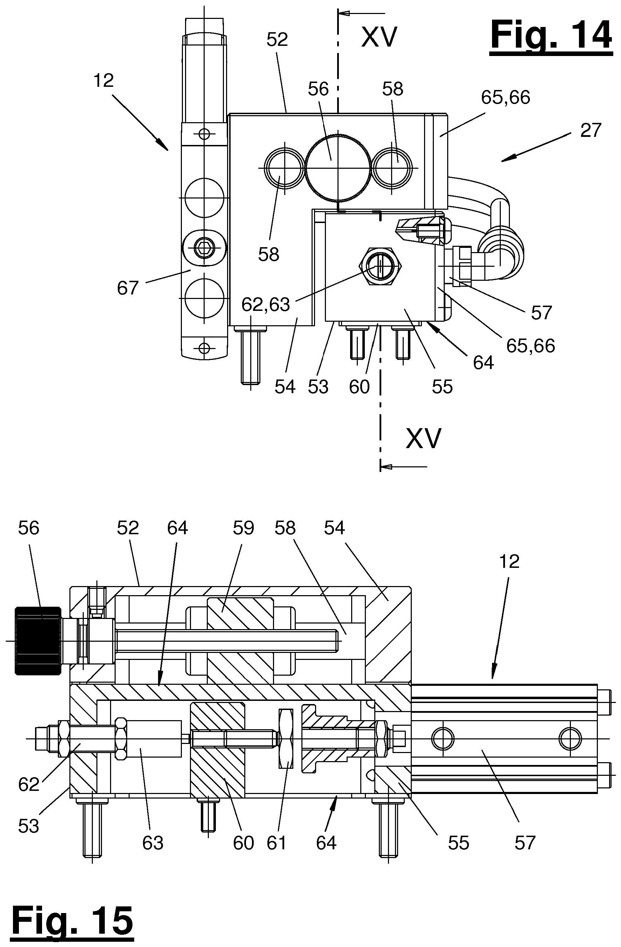

Figur 13 zeigt in perspektivischer Ansicht die Verstelleinrichtung (12) zwischen Gestell (7) und Träger (8) ohne die Zustelleinrichtung (9). In Figur 14 ist die zugehörige Stirnansicht gemäß Pfeil XIV von Figur 13 dargestellt, wobei Figur 15 den Schnitt XV-XV von Figur 14 verdeutlicht.

Die Verstellvorrichtung (12) ist am Gestell (7) abgestützt und wirkt auf einen seitlich abstehenden Mitnehmer (60) am Träger (8) ein. Hierüber kann die Verstellvorrichtung (12) den Träger (8) in der erwähnten Weise positionieren und ggf. zumindest teilweise in dieser Position festhalten. Die Verstellvorrichtung (12) ist dabei in Abhängigkeit von der Funktion der Zustelleinrichtung (9) steuerbar. Sie kann insbesondere bei Aktivierung der Zustellvorrichtung (9) gelöst werden. Hierzu können die Verstellvorrichtung (12) und die Zustelleinrichtung (9) steuertechnisch gekoppelt bzw. mit einer gemeinsamen Steuerung (nicht dargestellt) mit der Bearbeitungseinrichtung (1) verbunden sein.

In der gezeigten Ausführungsform ist die Verstellvorrichtung (12) mehrteilig ausgebildet und weist zwei Stellteile (52,53) mit Gehäusen (54,55) und Stellantrieben (56,57) auf. In einer Abwandlung kann die Zahl der Stellteile (52,53) und deren Komponenten größer sein.

Die gezeigte Verstellvorrichtung (12) ist teleskopierbar ausgebildet, wobei das eine Stellteil (52) am Gestell (7) mit den in Figur 14 und 15 dargestellten Schrauben oder anderen Befestigungselementen fixiert wird und sich hier abstützt. Das andere Stellteil (53) ist mittels einer Führung (58) am einen Stellteil (52) verstellbar gelagert. Die Stellachsen beider Stellteile (52,53) sind parallel zueinander und zur Prozessachse (48) ausgerichtet.

In der gezeigten Ausführungsform dient das Stellteil (53) zur Feinverstellung bzw. zur erwähnten Positionierung des Trägers (8) für die Zuführung eines Werkstücks zwischen die geöffneten Werkzeuge (2,3) bzw. Elektroden. Das Stellteil (52) kann zur Grobverstellung oder zur vergrößerten Zustellung dienen. Der vergrößerte Zustellweg kann zur Anpassung unterschiedlicher Zustelleinrichtungen (9) oder an unterschiedliche Werkzeug- oder Elektrodenkonfigurationen dienen.

Das Stellteil (53) für die Feinverstellung oder Positionierung weist einen steuerbaren Stellantrieb (57) auf, der z.B. als pneumatischer Zylinder mit einer Steuereinheit (67), insbesondere einer Ventileinheit, ausgebildet ist. Der Stellantrieb (57) wirkt mit einem Abtriebselement auf den Mitnehmer (60) ein, der mit Schrauben oder dgl. am Träger (8) befestigt ist. Der Stellantrieb (57) kann eine reine Vorschubfunktion haben und bei Ansteuerung den Mitnehmer (60) gegen einen festen oder verstellbaren Anschlag (52) schieben, der am gegenüberliegenden Ende des Gehäuses (55) angeordnet ist. Dem Anschlag (62) kann ein Stoßdämpfer (63) vorgeschaltet sein. Der verstellbare Anschlag (62) kann eine definierte Trägerposition für die Werkzeugzuführung bestimmen. Der Stellantrieb (57) kann bedarfsweise kraftlos geschaltet werden und eine Rückfahrbewegung des Mitnehmers (60) sowie des Trägers (8) erlauben. Dies geschieht z.B. bei Aktivierung der Zustelleinrichtung (9) und ermöglicht das Einschwimmen der Zustelleinrichtung (9) und der Werkzeuge (2,3) bzw. Elektroden am Werkstück.

Der Stellantrieb (57) kann eine vorbestimmte Kraft zur Mitnahme von Träger (8) und Mitnehmer (60) sowie zur Überwindung des Stoßdämpfers (63) aufbringen. Alternativ kann der Stellantrieb (57) auch einen vorbestimmten Weg mit gegebener Kraft ausführen und hierüber den Mitnehmer (60) nebst Träger (8) positionieren. Er kann hierzu in beliebig geeigneter Weise ausgebildet sein.

Das Gehäuse (55) des Stellteils (53) weist eine zum Träger (8) gerichtete Öffnung (64) auf, durch die der Mitnehmer (60) in den Gehäuseinnenraum ragen kann. Wie Figur 15 verdeutlicht, kann der Mitnehmer (60) verstellbar sein, wobei er z.B. ein per Gewinde oder dgl. ortsveränderliches Einstellelement (61) aufweist, welches mit dem Abtriebsteil des Stellantriebs (57) zusammenwirkt. Das Gehäuse (55) kann eine weitere Öffnung (65) aufweisen, die zu der gemeinsamen Bedien- und Service-Seite (27) gerichtet ist und mit einem abnehmbaren Deckel (66) verschließbar ist. Über diese Öffnung (65) sind die im Gehäuseinnenraum befindlichen Komponenten des Anschlags (62), Mitnehmer (60) und Stellantrieb (57) zugänglich.

Das Stellteil (53) ist in der erwähnten Weise am gestellfesten Stellteil (52) längsverstellbar gelagert und weist einen abstehenden Ansatz (59) auf, der durch eine Öffnung (64) in den hohlen Innenraum des Gehäuses (54) des Stellteils (52) ragt. Der Ansatz (59) ist dort mit der Führung (58) verbunden, die z.B. aus zwei parallelen Führungsstangen besteht, welche auch die Lagerung für das Stellteil (53) bilden. Das Gehäuse (54) kann ansonsten ebenfalls eine Öffnung (65) zur Bedien- und Service-Seite (27) mit einem Deckel (66) aufweisen.

Das Stellteil (52) kann einen manuellen oder maschinellen Stellantrieb (56) aufweisen, der ebenfalls einstellbar oder ggf. steuerbar ist. In der gezeigten Ausführungsform ist der Stellantrieb (56) als Stellschraube ausgebildet, die am Ansatz (59) über ein Gegengewinde angreift und mit der das Stellteil (53) relativ zum Stellteil (52) positioniert werden kann. Die Position kann bedarfsweise fixiert werden, z.B. durch die in Figur 15 gezeigte Klemmschraube. In Figur 1, 2 und 13 ist außerdem noch ein Maßstab mit Zeiger an Gestell (7) und Träger (8) zur Positionsbestimmung dargestellt.

Varianten der gezeigten und beschriebenen Ausführungsbeispiele sind in verschiedener Weise möglich. Die vorbeschriebenen Ausführungsbeispiele für eine oder mehrere Elektroden (2,3) und Elektrodenhalter (5,6) gelten entsprechend auch für andere elektrische Bearbeitungseinrichtungen (1) und deren ein oder mehrere Werkzeuge und Werkzeughalter. Eine Bearbeitungseinrichtung (1) kann beispielsweise nur ein Werkzeug bzw. eine Elektrode (2) aufweisen, wobei der andere Pol der Stromversorgung am Werkstück angeschlossen ist. Ferner können einander am Werkstück gegenüberliegende Werkzeuge oder Elektroden (2,3) jeweils eine Zustellvorrichtung (9) aufweisen. Die Zahl und Formgebung der Werkzeuge oder Elektroden (2,3) kann von den gezeigten Ausführungsbeispielen abweichen, wobei die Zahl insbesondere größer als zwei sein kann.

Abwandlungen sind ferner hinsichtlich der konstruktiven Ausgestaltung der Zustelleinrichtung (9) und ihrer Komponenten möglich. Der Antrieb (10) kann z.B. als hydraulischer Zylinder, als Kurbeltrieb oder dgl. ausgebildet sein. Insbesondere kann ein Servoantrieb (42) einen anderen Abtrieb, z.B. einen Zahnstangentrieb mit einer Zahnstange als Abtriebsstange (45) aufweisen. Ein abgewandelter Spindeltrieb kann eine umgekehrte Kinematik mit drehend angetriebener Spindelmutter und ausgeschobener Gewindespindel haben. Ferner sind beliebige andere Antriebsgestaltungen möglich.

Bei der Führungseinrichtung (11) kann das Treibelement (29) in anderer Weise ausgebildet, gelagert und geführt sein, z.B. als Lenkergetriebe, insbesondere Scherengetriebe, mit entsprechend anderer Anordnung und Ausbildung eines Antriebs. Ferner kann die Verdrehsicherung (31) entfallen oder in anderer Weise ausgeführt sein, z.B. durch eine nicht rotationssymmetrische Querschnittsform einer Treibstange.

In der gezeigten Ausführungsform führt die Zustelleinrichtung (9) nur axiale Zustellbewegungen und Rückzugsbewegungen entlang der zentralen Prozessachse (48) aus. Sie kann alternativ eine oder mehrere weitere und ggf. überlagerte Bewegungen, z.B. eine oszillierende oder rotierende Umlaufbewegung, um die Achse (48) ausführen. Hierfür kann ein entsprechend anderer Antrieb oder ggf. auch ein weiterer Antrieb vorhanden sein.

Die Ausbildung und Anordnung der Zustelleinrichtung (9) an einem beweglichen Träger (8) und die steuerbare Verstellvorrichtung (12) für den Träger (8) können ohne die Isolierscheibe (13) oder mit einem anderen elektrischen Isolierelement, z.B. einer Isolierbeschichtung, einer Isolierfolie oder dgl. realisiert werden und sind auch unabhängig von einer modularen oder nicht modularen Ausbildung des ggf. nicht wechselbaren Antriebs (10) und der Führungseinrichtung (11) .

### BEZUGSZEICHENLISTE

- 1: Bearbeitungseinrichtung, Schweißeinrichtung
- 2: Werkzeug, Elektrode
- 3: Werkzeug, Elektrode
- 4: Stromanschluss
- 5: Werkzeughalter, Elektrodenhalter, zustellbar
- 6: Werkzeughalter, Elektrodenhalter, Gegenhalter
- 7: Gestell
- 8: Träger, Schlitten, Modul
- 9: Zustelleinrichtung
- 10: Antrieb, Modul
- 11: Führungseinrichtung, Modul
- 12: Verstellvorrichtung, Modul
- 13: Isolierelement, Isolierscheibe, Keramikscheibe
- 14: Kontur
- 15: Schlüsselfläche
- 16: Durchgangsöffnung
- 17: Fixierelement, Schraube
- 18: Isolierteil, Isolierhülse
- 19: Dichtung
- 20: Öffnung
- 21: Elementhalter, Interfacehalter
- 22: Elementhalter, Basishalter
- 23: Aufnahme, Fassung
- 24: Kontur
- 25: Durchgangsöffnung
- 26: Gehäuse
- 27: Bedien- und Service-Seite
- 28: Gestell, Grundkörper
- 29: Treibelement, Treibstange
- 30: Lagerung
- 31: Verdrehsicherung
- 32: Schnittstelle zu Antrieb
- 33: Schnittstelle zu Werkzeughalter
- 34: Anschluss Gehäuse, Anbaustelle
- 35: Anschluss Treibelement, Innengewinde
- 36: Kupplung
- 37: Abtriebselement
- 38: Anschluss Treibelement
- 39: Anbauflansch
- 40: Zylinder
- 41: Kolbenstange
- 42: Servoantrieb, Spindeltrieb
- 43: Motor
- 44: Spindelmutter
- 45: Abtriebsstange, Gewindespindel
- 46: Anschluss, Anbaustelle
- 47: Gestell, Grundkörper
- 48: Achse, Prozessachse
- 49: Sensorik
- 50: Halterung
- 51: Anschluss, Steckfassung
- 52: Stellteil, Grobverstellung
- 53: Stellteil, Feinverstellung
- 54: Gehäuse
- 55: Gehäuse
- 56: Stellantrieb, Stellschraube
- 57: Stellantrieb, Zylinder
- 58: Führung
- 59: Ansatz
- 60: Mitnehmer an Träger
- 61: Einstellelement
- 62: Anschlag
- 63: Stossdämpfer
- 64: Öffnung zu Träger
- 65: Öffnung zu Bedienseite
- 66: Deckel
- 67: Steuereinheit, Ventileinheit

## Patentansprüche

1. Elektrische Bearbeitungseinrichtung, insbesondere Schweiß- oder Löteinrichtung, mit einem mit elektrischem Strom und mit einer Anpresskraft beaufschlagten Werkzeug (2), insbesondere einer Elektrode (2), und mit einem die Anpresskraft übertragenden Werkzeughalter (5), insbesondere einem Elektrodenhalter, wobei die Bearbeitungseinrichtung (1) eine Zustelleinrichtung (9) für ein Werkzeug (2), insbesondere für eine Elektrode, aufweist, wobei die Zustelleinrichtung (9) und ein relativ stationärer Werkzeughalter (6) an einem gemeinsamen Träger (8) angeordnet sind, welcher als Schlitten ausgebildet und an einem Gestell (7) beweglich gelagert ist, wobei zwischen dem Träger (8) und dem Gestell (7) eine Verstellvorrichtung (12) angeordnet ist, welche den Träger (8) vorpositioniert oder zustellt **dadurch gekennzeichnet, dass** die Verstellvorrichtung (12) mehrteilig ausgebildet ist und zwei oder mehr Stellteile (52,53) mit Gehäusen (54,55) und Stellantrieben (56,57) aufweist, so dass eine Grob- und Feinverstellung erlaubt wird.

2. Bearbeitungseinrichtung nach Anspruch 1, **dadurch gekennzeichnet, dass** die Verstellvorrichtung (12) am Gestell (7) abgestützt ist und auf einen seitlich abstehenden, bevorzugt verstellbaren Mitnehmer (60) am Träger (8) einwirkt.

3. Bearbeitungseinrichtung nach Anspruch 1 oder 2, **dadurch gekennzeichnet, dass** die Verstellvorrichtung (12) in Abhängigkeit von der Funktion der Zustelleinrichtung (9) steuerbar ist, wobei sie insbesondere bei Aktivierung der Zustellvorrichtung (9) gelöst wird.

4. Bearbeitungseinrichtung nach Anspruch 1, 2 oder 3, **dadurch gekennzeichnet, dass** die Verstelleinrichtung und ihre zwei oder mehr Stellteile (52,63) teleskopierbar ausgebildet sind.

5. Bearbeitungseinrichtung nach einem der vorhergehenden Ansprüche, **dadurch gekennzeichnet, dass** das eine Stellteil (52) am Gestell (7) mit Befestigungselementen fixiert ist und sich hier abstützt, wobei das andere Stellteil (53) mittels einer Führung (58) am einen Stellteil (52) verstellbar gelagert ist.

6. Bearbeitungseinrichtung nach einem der vorhergehenden Ansprüche, **dadurch gekennzeichnet, dass** die Stellachsen beider Stellteile (52,53) parallel zueinander und zu einer Prozessachse (48) der Bearbeitungseinrichtung (1) ausgerichtet sind.

7. Bearbeitungseinrichtung nach einem der vorhergehenden Ansprüche, **dadurch gekennzeichnet, dass** das andere Stellteil (53) zur Feinverstellung, insbesondere zur Positionierung des Trägers (8) für die Zuführung eines Werkstücks zwischen die geöffneten Werkzeuge (2,3), insbesondere Elektroden, dient, wobei das eine Stellteil (52) zur Grobverstellung oder zur vergrößerten Zustellung dient.

8. Bearbeitungseinrichtung nach einem der vorhergehenden Ansprüche, **dadurch gekennzeichnet, dass** das Stellteil (53) für eine Feinverstellung oder Positionierung einen steuerbaren Stellantrieb (57),
insbesondere einen pneumatischen Zylinder mit einer Steuereinheit (67), aufweist, der mit einem Abtriebselement auf den am Träger (8) bevorzugt verstellbar befestigten Mitnehmer (60) einwirkt.

9. Bearbeitungseinrichtung nach Anspruch 8, **dadurch gekennzeichnet, dass** der Stellantrieb (57) eine reine Vorschubfunktion hat und bei Ansteuerung den Mitnehmer (60) gegen einen festen oder verstellbaren Anschlag (52) mit einem ggf. vorgeschalteten Stoßdämpfer (63) schiebt, der am gegenüberliegenden Ende des Gehäuses (55) angeordnet ist.

10. Bearbeitungseinrichtung nach Anspruch 8 oder 9, **dadurch gekennzeichnet, dass** der Stellantrieb (57) kraftlos geschaltet wird und eine Rückfahrbewegung des Mitnehmers (60) sowie des Trägers (8) erlaubt und bei Aktivierung der Zustelleinrichtung (9) ein Einschwimmen der Zustelleinrichtung (9) und der Werkzeuge (2,3) bzw. Elektroden am Werkstück ermöglicht.

11. Bearbeitungseinrichtung nach einem der vorhergehenden Ansprüche, **dadurch gekennzeichnet, dass** der Stellantrieb (56) des einen Stellteils (52) ein motorisches Antriebsmittel, insbesondere einen Zylinder oder dgl., oder ein manuelles Stellmittel, z.B. eine Schraube, aufweist.

12. Bearbeitungseinrichtung nach einem der vorhergehenden Ansprüche, **dadurch gekennzeichnet, dass** die Bearbeitungseinrichtung (1) modular ausgebildet ist, wobei die Zustelleinrichtung (9) modular ausgebildet ist und einen austauschbaren Antrieb (10) und eine Führungseinrichtung (11) zur Antriebsübertragung auf das Werkzeug (2,3), insbesondere die Elektrode, aufweist.

13. Bearbeitungseinrichtung nach Anspruch 12, **dadurch gekennzeichnet, dass** die Führungseinrichtung (11) der Zustelleinrichtung (9) eine definierte Schnittstelle zum wechselbaren Anschluss unterschiedlicher Antriebe (10) aufweist, wobei die Schnittstelle einheitliche Anschlüsse (34) für Gestelle oder Grundkörper der Führungseinrichtung (11) und des jeweiligen Antriebs (10) aufweist und wobei bevorzugt die Führungseinrichtung (11) ein beweglich geführtes und gelagertes Treibelement (29), insbesondere eine Treibstange, für die Kraft- und Wegübertragung aufweisen, welches einen einheitlichen Anschluss (35) zur direkten Verbindung oder mittelbaren Verbindung, insbesondere durch eine Kupplung (36), mit einem Abtriebselement (37) des Antriebs (10) aufweist.

14. Bearbeitungseinrichtung nach einem der vorhergehenden Ansprüche, **dadurch gekennzeichnet, dass** die elektrische Bearbeitungseinrichtung (1) für das Widerstands-Pressschweißen oder für das Löten oder für andere elektrothermischen Fügeverfahren mit Strom- und Druckbeaufschlagung eines Werkstücks einsetzbar ist.

15. Bearbeitungseinrichtung nach einem der vorhergehenden Ansprüche, **dadurch gekennzeichnet, dass** die Bearbeitungseinrichtung (1) eine einheitliche Bedien- und Service-Seite (27) aufweist.

## Claims

1. Electrical processing device, in particular a welding or soldering/brazing device, comprising a tool (2), in particular an electrode (2), to which electric current and a pressing force are applied, and comprising a tool holder (5), in particular an electrode holder, which transmits the pressing force, wherein the processing device (1) has an infeeding device (9) for a tool (2), in particular for an electrode, wherein the infeeding device (9) and a relatively stationary tool holder (6) are arranged on a common support (8), which is formed as a carriage and is movably mounted on a frame (7), wherein arranged between the support (8) and the frame (7) is an adjusting device (12), which prepositions or infeeds the support (8), **characterized in that** the adjusting device (12) is of a multipart form and has two or more adjusting parts (52, 53) with housings (54, 55) and servo drives (56, 57), so that a coarse and fine adjustment is allowed.

2. Processing device according to Claim 1, **characterized in that** the adjusting device (12) is supported on the frame (7) and acts on a laterally protruding, preferably adjustable driver (60) on the support (8).

3. Processing device according to Claim 1 or 2, **characterized in that** the adjusting device (12) is controllable in dependence on the function of the infeeding device (9), wherein it is triggered in particular when the infeeding device (9) is activated.

4. Processing device according to Claim 1, 2 or 3, **characterized in that** the adjusting device and its two or more adjusting parts (52, 63) are telescopically formed.

5. Processing device according to one of the preceding claims, **characterized in that** the one adjusting part (52) is fixed on the frame (7) by fastening elements and supported here, wherein the other adjusting part (53) is adjustably mounted on an adjusting part (52) by means of a guide (58).

6. Processing device according to one of the preceding claims, **characterized in that** the adjusting axes of the two adjusting parts (52, 53) are aligned parallel to one another and to a process axis (48) of the processing device (1).

7. Processing device according to one of the preceding claims, **characterized in that** the other adjusting part (53) serves for the fine adjustment, in particular for the positioning of the support (8) for the infeeding of a workpiece between the open tools (2, 3), in particular electrodes, wherein the one adjusting part (52) serves for coarse adjustment or for increased infeeding.

8. Processing device according to one of the preceding claims, **characterized in that** the adjusting part (53) for a fine adjustment or positioning has a controllable servo drive (57), in particular a pneumatic cylinder with a control unit (67), which acts by an output element on the driver (60) fastened preferably adjustably to the support (8).

9. Processing device according to Claim 8, **characterized in that** the servo drive (57) has just an advancing function and, when activated, pushes the driver (60) against a fixed or adjustable stop (52) with a possibly preceding shock absorber (63), which is arranged at the opposite end of the housing (55).

10. Processing device according to Claim 8 or 9, **characterized in that** the servo drive (57) is deenergized and allows a return movement of the driver (60) and of the support (8) and, when the infeeding device (9) is activated, floating of the infeeding device (9) and the tools (2, 3) or electrodes on the workpiece is made possible.

11. Processing device according to one of the preceding claims, **characterized in that** the servo drive (56) of the one adjusting part (52) has a motorized driving means, in particular a cylinder or the like, or a manual adjusting means, for example a screw.

12. Processing device according to one of the preceding claims, **characterized in that** the processing device (1) is of a modular form, wherein the infeeding device (9) is of a modular form and has an exchangeable drive (10) and a guiding device (11) for transmitting the drive to the tool (2, 3), in particular the electrode.

13. Processing device according to Claim 12, **characterized in that** the guiding device (11) of the infeeding device (9) has a defined interface for the interchangeable connection of different drives (10), wherein the interface has uniform connections (34) for frames or main bodies of the guiding device (11) and of the respective drive (10) and wherein the guiding device (11) preferably has a movably guided and mounted driving element (29), in particular a driving rod, for the transmission of force and distance, which has a uniform connection (35) for direct connection or indirect connection, in particular by a coupling (36), to an output element (37) of the drive (10).

14. Processing device according to one of the preceding claims, **characterized in that** the electrical processing device (1) can be used for resistance forge welding or for soldering/brazing or for other electrothermal joining processes involving application of current and pressure to a workpiece.

15. Processing device according to one of the preceding claims, **characterized in that** the processing device (1) has a uniform operating and service side (27).

## Revendications

1. Dispositif de traitement électrique, en particulier dispositif de soudage ou de brasage, comprenant un outil (2), en particulier une électrode (2), qui est alimenté en courant électrique et soumis à une force de pression, et un porte-outil (5), en particulier un porte-électrode, qui transmet la force de pression, le dispositif de traitement (1) comportant un dispositif d'approche (9) destiné à un outil (2), en particulier à une électrode, le dispositif d'approche (9) et un porte-outil (6) relativement stationnaire étant disposés sur un support commun (8) qui est conçu comme un chariot et étant monté de manière mobile sur un châssis (7), un dispositif de réglage (12) étant disposé entre le support (8) et le châssis (7) et pré-positionnant ou approchant le support (8), **caractérisé en ce que** le dispositif de réglage (12) est construit en plusieurs parties et comporte deux parties de réglage (52, 53) ou plus pourvues de boîtiers (54, 55) et d'actionneurs (56, 57) de façon à permettre un réglage grossier et un réglage fin.

2. Dispositif de traitement selon la revendication 1, **caractérisé en ce que** le dispositif de réglage (12) est en appui sur le châssis (7) et agit sur un entraîneur (60) saillant latéralement, de préférence réglable, au niveau du support (8).

3. Dispositif de traitement selon la revendication 1 ou 2, **caractérisé en ce que** le dispositif de réglage (12) peut être commandé selon la fonction du dispositif d'approche (9), le dispositif de réglage étant libéré en particulier lorsque le dispositif d'approche (9) est activé.

4. Dispositif de traitement selon la revendication 1, 2 ou 3, **caractérisé en ce que** le dispositif de réglage et ses deux parties de réglage (52, 63) ou plus sont conçus pour être télescopiques.

5. Dispositif de traitement selon l'une des revendications précédentes, **caractérisé en ce que** la première partie de réglage (52) est fixée au moyen d'éléments de fixation au châssis (7) où elle vient en appui, l'autre partie de réglage (53) étant montée de manière réglable sur une partie de réglage (52) au moyen d'un guide (58).

6. Dispositif de traitement selon l'une des revendications précédentes, **caractérisé en ce que** les axes de réglage des deux parties de réglage (52, 53) sont orientés parallèlement l'un à l'autre et à un axe de processus (48) du dispositif de traitement (1).

7. Dispositif de traitement selon l'une des revendications précédentes, **caractérisé en ce que** l'autre partie de réglage (53) est utilisée pour le réglage fin, en particulier pour le positionnement du support (8) pour amener une pièce entre les outils ouverts (2, 3), notamment des électrodes, la première partie de réglage (52) étant utilisée pour le réglage grossier ou pour une approche augmentée.

8. Dispositif de traitement selon l'une des revendications précédentes, **caractérisé en ce que** la partie de réglage (53) destinée à un réglage fin ou au positionnement comporte un actionneur commandable (57), notamment un vérin pneumatique qui comporte une unité de commande (67) et qui agit sur l'entraîneur (60), fixé de préférence de manière réglable au support (8), au moyen d'un élément de sortie.

9. Dispositif de traitement selon la revendication 8, **caractérisé en ce que** l'actionneur (57) a une pure fonction d'avancement et pousse, lorsqu'il est activé, l'entraîneur (60) contre une butée fixe ou réglable (52) pourvue d'un amortisseur de choc (63) qui est monté éventuellement en amont et qui est disposé à l'extrémité opposée du boîtier (55).

10. Dispositif de traitement selon la revendication 8 ou 9, **caractérisé en ce que** l'actionneur (57) est commuté sans force et permet un mouvement de recul de l'entraîneur (60) et du support (8) et permet, lorsque le dispositif d'approche (9) est activé, de faire flotter le dispositif d'approche (9) et les outils (2, 3) ou les électrodes au niveau de la pièce.

11. Dispositif de traitement selon l'une des revendications précédentes, **caractérisé en ce que** l'entraîneur (56) de la première partie de réglage (52) comporte un moyen d'entraînement motorisé, en particulier un cylindre ou analogue, ou un moyen de réglage manuel, par exemple une vis.

12. Dispositif de traitement selon l'une des revendications précédentes, **caractérisé en ce que** le dispositif de traitement (1) est modulaire, le dispositif d'approche (9) étant modulaire et comportant un entraînement échangeable (10) et un dispositif de guidage (11) destiné à transmettre l'entraînement à l'outil (2, 3), en particulier à l'électrode.

13. Dispositif de traitement selon la revendication 12, **caractérisé en ce que** le dispositif de guidage (11) du dispositif d'approche (9) comporte une interface définie destinée au raccordement interchangeable de différents entraînements (10), l'interface comportant des raccords uniformes (34) destinés aux châssis ou aux corps de base du dispositif de guidage (11) et de l'entraînement respectif (10) et le dispositif de guidage (11) comportant de préférence un élément d'entraînement (29), en particulier une barre d'entraînement, qui est guidé et monté de manière mobile, qui est destiné à la transmission de force et de déplacement, qui comporte un raccord uniforme (35) destiné à la liaison directe ou indirecte, en particulier au moyen d'un accouplement (36), à un élément de sortie (37) de l'entraînement (10).

14. Dispositif de traitement selon l'une des revendications précédentes, **caractérisé en ce que** le dispositif de traitement électrique (1) peut être utilisé pour le soudage par résistance ou sous pression ou pour le brasage ou pour d'autres procédés d'assemblage électrothermique avec exposition d'une pièce à un courant et une pression.

15. Dispositif de traitement selon l'une des revendications précédentes, **caractérisé en ce que** le dispositif de traitement (1) comporte un côté commande et service uniforme (27).
